# EUROPÄISCHE PATENTSCHRIFT

(11) **EP 0 617 651 B1**
(45) Veröffentlichungstag und Bekanntmachung des Hinweises auf die Patenterteilung: **23.04.1997**
(21) Anmeldenummer: 93902118.4
(22) Anmeldetag: 18.12.1992
(51) Int. Cl.: B23Q 16/08

(54) **BEARBEITUNGS- ODER UNTERSUCHUNGSVORRICHTUNG, INSBESONDERE WERKZEUGMASCHINE, MIT EINEM AUFSPANNTISCH FÜR AUFZUSPANNENDE GEGENSTÄNDE**
MACHINING OR TESTING DEVICE, IN PARTICULAR MACHINE-TOOL, WITH A CLAMPING TABLE FOR OBJECTS TO BE CLAMPED
DISPOSITIF D'USINAGE OU D'INSPECTION, NOTAMMENT MACHINE-OUTIL, A TABLE DE SERRAGE POUR OBJETS A SERRER

(30) Priorität: 20.12.1991 DE 4142362
(43) Veröffentlichungstag der Anmeldung: 05.10.1994
(73) Patentinhaber: FISCHER, Wolfgang, D-93089 Aufhausen (DE)
(72) Erfinder: FISCHER, Wolfgang, D-93089 Aufhausen (DE)
(74) Vertreter: Weickmann, Heinrich, Dipl.-Ing.
(86) Internationale Anmeldenummer: EP9202949
(87) Internationale Veröffentlichungsnummer: WO9312910

(56) Entgegenhaltungen:
- EP-A- 0 092 534
- EP-A- 0 154 813
- EP-A- 0 263 587
- WO-A-89/01079
- DE-A- 3 819 339
- DE-C- 3 802 987
- FR-A- 2 457 739
- PATENT ABSTRACTS OF JAPAN vol. 6, no. 223 (M-411)(1946) 10. September 1985 & JP-60 080 539

## Beschreibung

Die Erfindung betrifft eine Bearbeitungs- oder Untersuchungsvorrichtung, insbesondere Werkzeugmaschine, mit einem Aufspanntisch für aufzuspannede Gegenstände, wobei der Aufspanntisch eine Aufspannfläche und ein Feld von an diese Aufspannfläche angrenzenden Spannmitteln, wie T-Nuten, zum Aufspannen der Gegenstände aufweist.

Es ist bekannt, Bearbeitungs- oder Untersuchungsvorrichtungen, insbesondere Werkzeugmaschinen, mit einem Aufspanntisch für die jeweils zu behandelnden Gegenstände auszuführen und dabei in dem Aufspanntisch ein Feld von in die Aufspannfläche ausmündenden T-Nuten oder Schwalbenschwanznuten vorzusehen und die Gegenstände auf der Aufspannfläche mittels Aufspannwerkzeugen, z.B. Spannbolzen oder Spannpratzen, zu befestigen, welche jeweils in eine der T-Nuten oder Schwalbenschwanznuten eingreifen.

Es ist weiterhin aus der Deutschen Gebrauchsmusterschrift 90 12 544 bekannt, auf einem Werkzeugmaschinentisch mit gerasterten Befestigungsbohrungen eine Aufbauplatte zu positionieren, so daß Befestigungsbohrungen dieser Aufbauplatte mit Befestigungsbohrungen des Werkzeugmaschinentisches fluchten, und die Aufbauplatte durch Bolzen und/oder Schrauben auf dem Werkzeugmaschinentisch zu befestigen. Die Grundfläche der Aufbauplatte ist dabei klein gegenüber der Grundfläche des Werkzeugmaschinentisches und ist jeweils nur so groß, daß sie Platz zum Aufspannen einer Niederzugpratze bietet. Auf dem Werkzeugmaschinentisch können dann entsprechend der gewünschten Positionierung von Gegenständen Niederzugpratzen angebracht werden. Im Hinblick auf die grobe Teilung der Befestigungsbohrungen des Werkzeugmaschinentisches einerseits und im Hinblick auf die Forderung nach feinerer Positionierung der Niederzugpratzen auf dem Werkzeugmaschinentisch andererseits ist die Werkzeugaufbauplatte auf ihrer tischfernen Seite mit Linienrasterfeldern versehen, von denen zwei in einer ersten Richtung bezogen auf ein Koordinatensystem der Aufbauplatte verlaufen und ein weiteres zwischen diesen zweien in einer dazu senkrechten Richtung verläuft. Andererseits ist an der Fußfläche der Niederzugpratze ein Kreuzrasterfeld von Vorsprüngen angebracht, welches durch sich kreuzende Nuten gebildet ist. Die Vorsprünge des Kreuzrasterfelds passen in die Linienrasterfelder auf der Oberseite der Aufbauplatte, so daß die Niederzugpratze in kleinen Schritten auf der Aufbauplatte versetzt und befestigt werden kann. Zur Befestigung der mit der kreuzgerasterten Fußfläche versehenen Niederzugpratze auf der Aufbauplatte ist die Niederzugpratze von einem Langloch durchsetzt, durch welches eine Spannbrücke hindurchläuft. Die Spannbrücke wird mit der Aufbauplatte außerhalb der Linienrasterfelder verspannt und drückt die Niederzugpratze mit der kreuzgerasterten Fußfläche gegen die liniengerasterten Felder der Aufbauplatte, so daß die Niederzugpratze in zwei zueinander senkrechten Richtungen formschlüssig mit der Aufbauplatte in Eingriff steht. Die Länge des Langloches und die Länge der Spannbrücke in zwei zueinander senkrechten Richtungen bestimmen das Ausmaß möglicher Positionsvariierung der Niederzugpratze gegenüber der Aufbauplatte.

Eine großflächige Positionsvariierung der Niederzugspratze gegenüber dem Werkzeugmaschinentisch ist nicht möglich; sie scheitert schon an der gewählten Spannvorrichtung, deren Länge im Hinblick auf die Gefahr eines Aushebens des Kreuzrasterfelds aus den Linienfeldern beschränkt ist.

In der Gebrauchsmusterschrift ist bereits angedeutet, daß die Spitzen der pyramidenförmigen Vorsprünge des Kreuzrasterfelds und auch die Spitzen der Rippen des Linienrasterfelds abgeflacht sein können, um einen auch bei leichten Verschmutzungen einwandfreien Sitz zu ermöglichen. Die Möglichkeit eines Anlegens von Gegenständen an ein Kreuzrasterfeld bei großflächig planaren Fußflächen der Gegenstände ist nicht in Betracht gezogen.

Der Erfindung liegt die Aufgabe zugrunde, eine Bearbeitungs- oder Untersuchungsvorrichtung der eingangs definierten Gattung so auszubilden, daß sie wahlweise mit Gegenständen bestückt werden kann, die zur Erzielung eines reproduzierbaren Formschlusses ein Rasterfeld besitzen, wahlweise aber auch mit Gegenständen bestückt werden kann, die eine planare Fußfläche besitzen, und zwar grundsätzlich, wenn auch nicht ausschließlich, ohne die Zwischenschaltung eines Zwischenträgers.

Zur Lösung dieser Aufgabe wird erfindungsgemäß die Kombination folgender Merkmale vorgeschlagen:
a) die Aufspannfläche ist im wesentlichen auf ihrem gesamten Flächenbereich mit einem Kreuzrasterfeld von pyramidenförmigen Vorsprüngen versehen, welches durch zwei sich unter einem Winkel von 90° kreuzenden Scharen von jeweils zueinander parallelen Nuten gebildet ist, so daß durch jeweils zwei sich kreuzende Paare von benachbarten Nuten jeweils ein pyramidenförmiger Vorsprung begrenzt ist;
b) die pyramidenförmigen Vorsprünge sind parallel zur Aufspannfläche mit solchen Abflachungen versehen, daß wahlweise auf die Aufspannfläche Gegenstände mit einem dem Kreuzrasterfeld angepaßten Linienrasterfeld an der jeweiligen Fußfläche und Gegenstände mit planer Fußfläche aufspannbar sind;
c) als Spannmittel verwendbare T-Nuten eines Felds von in die Aufspannfläche ausmündenden T-Nuten verlaufen parallel zu mindestens einer der sich kreuzenden Scharen von pyramidenbildenden Nuten des Kreuzrasterfelds;
d) benachbarte, zueinander parallele T-Nuten haben voneinander einen Abstand - jeweils von Querschnittsmitte zu Querschnittsmitte der T-Nuten gemessen - , der einem ganzzahligen Vielfachen der Teilung der Vorsprünge entspricht,
   und der Querschnitt einer T-Nut ist symmetrisch zwischen den Querschnitten zweier beidseitig unmittelbar neben dieser T-Nut liegender pyramidenförmiger Vorsprünge angeordnet.

Zusätzliche Spannmittel können als elektromagnetische oder permanentmagnetische Spannmittel ausgebildet sein.

Die erfindungsgemäße Ausgestaltung bringt einen erheblichen Vorteil: Wenn sich ein Benutzer eine erfindungsgemäße Bearbeitungs- oder Untersuchungsvorrichtung kauft, so hat er zum einen die Möglichkeit, die dem Kreuzrasterfeld der Aufspannfläche angepaßten, gleichzeitig eingekauften Gegenstände, z.B. Anschlagkörper und/oder Zwischenträger und/oder Stützteile eines Aufspannwerkzeugs auf dem Kreuzrasterfeld in formschlüssiger Weise positionsgerecht und reproduzierbar anzubringen. Er hat aber dank der Abflachung der pyramidenförmigen Vorsprünge des Kreuzrasterfeldes zusätzlich die Möglichkeit, solche Gegenstände auf seiner neu eingekauften Bearbeitungs- oder Untersuchungsvorrichtung aufzuspannen, welche entsprechend der bisherigen Verwendung an Bearbeitungs- oder Untersuchungsvorrichtungen mit im wesentlichen planer Aufspannfläche eine flache oder plane Fußfläche besitzen. Diese früher eingekauften Gegenstände stellen für den Anwender nach wie vor einen erheblichen Wert dar. Dank der erfindungsgemäßen Lösung bleibt dieser Wert erhalten. Anders ausgedrückt: Der Anwender ist nicht gezwungen, sofort beim Einkauf der neuen erfindungsgemäßen Bearbeitungs- oder Untersuchungsvorrichtung sämtliche aufzuspannenden Zubehörteile zu ersetzen. Er kann vielmehr den Fundus vorhandener Zubehörteile nach wie vor verwenden und zunächst die Neuanschaffung von Zubehörteilen auf diejenigen beschränken, für welche die formschlüssige Positionierung unbedingt erforderlich oder besonders hilfreich ist.

Dadurch, daß die Aufspannfläche im wesentlichen auf ihrem gesamten Flächenbereich mit dem Kreuzrasterfeld versehen ist, ergibt sich in Verbindung mit den ebenfalls über diese ganze Fläche verteilbaren Spannmitteln die Möglichkeit, die Position eines Gegenstands innerhalb des Kreuzrasterfelds frei zu wählen. Dies gilt insbesondere dann, wenn die Aufspannfläche entsprechend einer Möglichkeit von einem Aufspanntisch der Bearbeitungs- oder Untersuchungsvorrichtung unmittelbar gebildet ist. Dies gilt aber auch dann, wenn auf die eigentliche Tischfläche des Grundtisches einer Bearbeitungs- oder Untersuchungsvorrichtung ein Zwischenträger mit entsprechend großem Kreuzrasterfeld aufgespannt ist. Hinzu kommt, daß es zur Herstellung der das Kreuzrasterfeld bildenden Nutenscharen herstellungstechnisch besonders zweckmäßig ist, wenn man die Nutenscharen an den Kanten des Grundtisches oder des Zwischenträgers ins Freie auslaufen lassen kann. Dadurch, daß der Querschnitt einer T-Nut symmetrisch zwischen den Querschnitten zweier beidseitig unmittelbar neben dieser T-Nut anliegender pyramidenförmiger Vorsprünge angeordnet ist und daß benachbarte, zueinander parallele T-Nuten voneinander einen gleichbleibenden Abstand - jeweils von Querschnittsmitte zur Querschnittsmitte der T-Nuten gemessen - haben, der einem ganzzahligen Vielfachen der Teilung der Vorsprünge entspricht, läßt sich die Zahl der Befestigungspositionen der Gegenstände auf dem Kreuzrasterfeld noch optimieren.

Die Querschnitte der Vorsprünge und Rippen können und werden in der Regel mit geradlinigen Flanken ausgeführt werden. Dadurch wird eine sehr exakte Positionierung des Gegenstands gegenüber dem jeweiligen Kreuzrasterfeld erzielt unter der Voraussetzung, daß die Aufspannfläche und die Fußfläche von Spänen, Staubteilen und dergleichen absolut frei sind. Es hat sich gezeigt, daß eine exakte Positionierung auch dann möglich ist, wenn die Querschnitte der Vorsprünge und Rippen durch konvex gekrümmte Flanken begrenzt sind. In diesem Fall ist die Anfälligkeit der Positionierungsgenauigkeit gegenüber eingeschlossenen Verunreinigungsteilchen wesentlich reduziert. Diese werden nämlich dann beim Aufsetzen der Fußfläche auf die Aufspannfläche oder umgekehrt aus dem Linienberührungsbereich, der sich nach Erreichen der Endstellung letztlich ergibt, herausgeschoben und können sich in Spaltbereichen ansammeln, in denen keine Anlage zwischen den Flanken der Vorsprünge und den Flanken der Rippen besteht.

Die Teilung der Vorsprünge und der Rippen in dem Kreuzrasterfeld bzw. den Linienrasterfeldern ist an sich beliebig. Um möglichst feinstufige Positionsvariationen in der Ebene der Aufspannfläche vornehmen zu können, ist es natürlich erwünscht, eine möglichst feine Teilung vorzunehmen. Andererseits erhöht die Feinheit der Teilung die Anfälligkeit der Kreuzrasterfelder und der Linienrasterfelder gegen Beschädigung. Auch wird die formschlüssige Kraftübertragungsfähigkeit in der Ebene des Kreuzrasterfelds der Aufspannfläche durch allzu feine Teilung beeinträchtigt. Es wurde gefunden, daß eine Teilung der Vorsprünge und Rippen in der Größenordnung von ca. 1 bis ca. 8 mm, vorzugsweise von ca. 3 bis ca. 6 mm, einen günstigen Kompromiß zwischen feinstufiger Positionierung einerseits und Unanfälligkeit gegen Beschädigung sowie ausreichendem Formschluß andererseits darstellt. Unter Teilung wird sowohl bei den Vorsprüngen als auch bei den Rippen der jeweilige Abstand von Querschnittsmitte zur Querschnittsmitte verstanden.

Es wird empfohlen, das Feld von T-Nuten mit sich orthogonal kreuzenden T-Nuten auszuführen. Dies erlaubt eine weitere Erhöhung der Positionierungsmöglichkeiten.

Der Begriff "T-Nut" wird hier zur Bezeichnung aller denkbaren Formen hinterschnittener Nuten verwendet, auch wenn diese von der strengen T-Form abweichen.

Es wird weiter empfohlen, daß die Ausgangsbegrenzungsflächen einer T-Nut, im Querschnitt durch die T-Nut betrachtet, stufenlos an die Flanken benachbarter Vorsprünge im Basisbereich dieser Vorsprünge anschließen. Dadurch wird die Zahl der Positionierungsmögichkeiten weiter erhöht, gleichzeitig die Handhabung erleichtert und die Verschmutzungsgefahr reduziert.

An den aufzuspannenden Gegenständen können Spannbolzendurchgänge im wesentlichen senkrecht zu der jeweiligen Fußfläche vorgesehen sein, so daß in diese Spannbolzendurchgänge einerseits und die T-Nuten der Aufspannfläche andererseits Spannbolzen eingesetzt werden können. Es ist aber auch möglich, in den aufzuspannenden Gegenständen angrenzend an der jeweiligen Fußfläche eine oder mehrere T-Nuten vorzusehen, so daß Spannbolzen einerseits mit einem T-Spannkopf in die T-Nuten der Aufspannfläche und andererseits mit einem weiteren T-Spannkopf in eine T-Nut der jeweiligen Fußfläche eingreifen können. Bei der letzteren Ausführungsform kann es notwendig werden, daß mindestens einer der T-Spannköpfe zum Eingriff eines Drehangriffswerkzeugs ausgebildet wird, so daß letzteres über ausreichende Nutlänge in die Nut eingeführt werden kann.

Wenn ein Spannmittel für eine magnetische oder elektromagnetische Aufspannung der Gegenstände vorhanden ist, so kann es etwa in der Weise ausgebildet sein, daß im Bereich des Kreuzrasterfelds Elektromagnete oder Permanentmagnete angeordnet sind und daß der Gegenstand wenigstens zum Teil aus magnetischem Werkstoff besteht. Es gibt Permanentmagnete für diesen Zweck, die sich durch mechanische Lageveränderung auf "wirksam" und "unwirksam" schalten lassen.

Die Aufspannfläche kann integraler Bestandteil des Grundtisches der jeweiligen Vorrichtung sein oder auf der Vorrichtung ggf. in unterschiedlichen Positionen nachträglich angebracht werden, insbesondere wieder auf dem Grundtisch.

Wenn hier von Bearbeitungs- oder Untersuchungsvorrichtungen die Rede ist, so sollen neben Werkzeugmaschinen beispielsweise auch Montagemaschinen, Verpackungsmaschinen, Druckmaschinen, Stanzmaschinen, Oberflächenbehandlungsmaschinen, Reinigungsmaschinen und Beschickungsmaschinen erfaßt sein. Wenn hier weiter von Untersuchungsvorrichtungen die Rede ist, so ist auch dieser Begriff im weitesten Sinn zu verstehen. Er umfaßt Meßvorrichtungen, Vorrichtungen der Endkontrolle usw.

Wenn die Aufspannfläche an einem Zwischenträger ausgebildet werden soll, so kann dieser Zwischenträger beispielsweise von einer Auflageplatte eines Grundtisches gebildet sein, wobei die Größe der Auflageplatte vorzugsweise wenigstens annähernd der Größe des Grundtisches entspricht.

Es ist aber auch möglich, daß der Zwischenträger von einem Quader, insbesondere einem Würfel, gebildet ist, wobei mindestens ein Teil der Seitenflächen dieses Quaders bzw. Würfels als Aufspannflächen ausgebildet sind. Diese Ausgestaltung erlaubt es, einen oder auch mehrere Gegenstände in verschiedenen Positionen gegenüber den jeweiligen Bearbeitungsmitteln oder Meßmitteln der Maschine anzuordnen.

Benutzt man so einen Quader als Zwischenträger, so kann er im Bereich mindestens einer Seitenfläche mit einem bzw. zwei Linienrasterfeldern ausgeführt sein, so daß sich dieser Zwischenträger wiederum in besonders einfacher und leicht reproduzierbarer formschlüssiger Weise an einer Aufspannfläche nach den weiter oben behandelten Prinzipien anbringen läßt.

Weiter kann von den im eingebauten Zustand frei liegenden Seitenflächen des Quaders bzw. Würfels, denjenigen Seitenflächen also, die zur Anbringung von Gegenständen zur Verfügung stehen, mindestens eine, vorzugsweise eine Mehrzahl von ihnen mit Kreuzrasterfeldern ausgeführt sein, vorzugsweise über den Gesamtbereich der jeweiligen Seitenfläche, so daß an den so verfügbaren Kreuzrasterfeldern wieder die Fußflächen von Gegenständen entsprechend den weiter oben beschriebenen Prinzipien positioniert und festgespannt werden können.

Wie auch immer der Zwischenträger im einzelnen gestaltet ist, er kann auf einem Tisch einer vorhandenen Vorrichtung auch nach an sich bekannten Möglichkeiten befestigt werden. Z. B. kann der Tisch mit einem Grobrasterfeld versehen sein, etwa einem Grobrasterfeld von Bohrungen und Gewindebohrungen senkrecht zur jeweiligen Tischebene, die nach einem Quadrat- oder Rechteckmuster verteilt angeordnet sind.

Die Zwischenträger können beispielsweise auch als Beschickungsplatten oder Beschickungsträger ausgebildet sein. Solche Beschickungsträger sind verbreitet für den Einsatz bei sog. Bearbeitungscentern, welche als elektronisch gesteuerte Werkzeugmaschinen mit automatisch austauschbaren Werkstücken und automatisch austauschbaren Werkzeugen zu verstehen sind.

Der Begriff "Gegenstände" im Sinne der Erfindung ist weit zu ziehen. Gegenstände sind nicht notwendig nur zu behandelnde Gegenstände, sondern können auch selbst an der Behandlung teilnehmen, beispielsweise als Werkzeuge.

Was die Form anbelangt, so können die Gegenstände insbesondere als Leiste oder als Platte ausgebildet sein. Dies gilt insbesondere auch, wenn der Gegenstand selbst ein Zwischenträger ist. Um in einem Anwenderbetrieb Leisten und Platten als Zwischenträger in unterschiedlichsten Formen und Größen entsprechend dem jeweiligen Bedarf verfügbar zu machen, ist es denkbar, daß die Leiste oder Platte von einem Abschnitt eines Langteils gebildet ist, wobei mindestens eine Seitenfläche dieses Langteils zwei in Längsrichtung des Langteils verlaufende und in Querrichtung des Langteils gegeneinander abgegrenzte Linienrasterfelder aufweist, von denen jeweils eines durch in Längsrichtung des Langteils verlaufende Nuten und das andere durch in Querrichtung zum Langteil verlaufende Nuten gebildet ist. Der Anwender braucht dann im Bedarfsfall nur von dem jeweiligen Langteil ausgewählter Breite einen Abschnitt vorher festgelegter Länge abzuschneiden und verfügt dann über einen Zwischenträger oder einen Anschlagteil oder dergleichen. Es wäre denkbar, die Langteile auch bereits in Abständen mit Befestigungsbohrungen zu versehen. Da die Lage der Befestigungsbohrungen aber von Anwendungsfall zu Anwendungsfall variieren kann, ist es auch denkbar, dem Anwender das Bohren der Befestigungsbohrungen zu überlassen. Sind beispielsweise die Zwischenträger zur Kombination mit Vorrichtungen bestimmt, die im Anwenderbetrieb bereits vorhanden sind und ein vorbestimmtes Lochbild aufweisen, so wird man die Zwischenträger einerseits mit diesem Lochbild entsprechenden Befestigungsmitteln versehen und andererseits mit Befestigungsmitteln, die dem jeweiligen Träger angepaßt sind.

Als ein Beispiel vorteilhafter Anwendung der Erfindung sei eine Mehrfachspannanordnung zum Aufspannen von Behandlungs- oder Untersuchungsgegenständen auf einer Aufspannfläche erwähnt. Die Aufspannfläche ist dann mit dem Kreuzrasterfeld, wie vorstehend beschrieben, versehen. Eine Mehrzahl von Aufspannwerkzeugen wird in einer Reihe auf der Aufspannfläche angeordnet. Jedes dieser Aufspannwerkzeuge umfaßt ein Stützteil mit erfindungsgemäß gestalteter Fußfläche zur Fixierung auf der kreuzgerasterten Aufspannfläche und ein Spannteil, welches auf dem Stützteil durch eine Schrägführung gleichzeitig senkrecht zur Aufspannfläche und in Reihenlängsrichtung geführt ist. Zwischen aufeinander folgenden Behandlungs- oder Untersuchungsgegenständen braucht dann in Reihenlängsrichtung jeweils nur ein Abstand entsprechend der Länge eines solchen Spannwerkzeugs zu bestehen. Es ergibt sich eine Anordnung derart, daß in Reihenlängsrichtung aufeinanderfolgende Behandlungs- oder Untersuchungsgegenstände zwischen eine Spannfläche des Stützteils eines einendig zugehörigen Spannwerkzeugs und eine Spannfläche des Spannteils eines anderendig zugehörigen Spannwerkzeugs eingespannt sind. Dabei können die Spannteile der Spannwerkzeuge wiederum in beliebiger Weise gegen die Aufspannfläche angenähert und gespannt werden, beispielsweise durch mit Gewinde versehene Spannbolzen.

Es ist klar, daß durch die erfindungsgemäße Kombination einer Aufspannfläche mit Kreuzrasterfeld und eines Gegenstands mit zwei gekreuzten Linienrasterfeldern nicht jede beliebige Relativposition des Gegenstands auf der Aufspannfläche eingerichtet werden kann. Es ist vielmehr eine stufenweise Lageveränderung des Gegenstands zur Aufspannfläche möglich, wobei die Stufengröße von der Teilung des Kreuzrasterfelds und der Linienrasterfelder abhängt. Andererseits ist davon auszugehen, daß die in Frage kommenden Bearbeitungs- und Untersuchungsvorrichtungen in aller Regel eine kontinuierliche Feinjustierung an anderer Stelle zulassen, so daß die feinstufige Positionierbarkeit nach der Erfindung völlig ausreichend ist, um alle in Frage kommenden Behandlungs- und Untersuchungsvorgänge durchführen zu können. Es sei der in der Praxis bedeutsame Fall exemplarisch angenommen, daß auf einem Werkzeugtisch einer computergesteuerten Werkzeugmaschine eine Trägerplatte positioniert ist und daß auf dieser Trägerplatte eine Vielzahl von Einspannvorrichtungen für zu bearbeitende Objekte angebracht werden sollen. Es sei weiter angenommen, daß die Trägerplatte durch vorhandene Positionierungsmittel auf dem Tisch der Werkzeugmaschine eindeutig festgelegt ist. Es sei dann weiter angenommen, daß der Anwender bestimmte Bearbeitungsaufgaben, etwa für Kleinserien, in zeitlichen Abständen durchführen will und dazwischen auf der gleichen Maschine andere Arbeiten ausführt. Im ersten Bearbeitungsfall werden dann die untereinander gleichen oder voneinander verschiedenen Werkstücke in der jeweils von der Bearbeitung und von der Platzausnutzung optimalen Weise aufgespannt. Ein Bearbeitungswerkzeug, beispielsweise ein Fräskopf, wird dann im ersten Bearbeitungsfall jeweils auf die verschiedenen Bearbeitungsstellen der einzelnen Werkstücke hin ausgerichtet. Jede einmal einjustierte Position des Fräskopfes wird in einen Speicher eingespeichert. Ferner werden alle Positionen der Spannwerkzeuge und etwaiger zusätzlich zu den Spannwerkzeugen eingesetzter Anschläge listenmäßig oder computermäßig gespeichert, so daß bei Wiederholung des Bearbeitungsfalles die Spannwerkzeuge auf einfachste Weise in ihren jeweiligen Bearbeitungspositionen reproduziert werden können. Hierzu kann z.B. eine Durchnumerierung einzelner Vorsprünge und Rippen oder entsprechender Nuten dienen, wobei die Nummern an dem Träger eingraviert oder sonstwie angebracht werden können. Auf diese Weise ist die erneute Einstellung der Maschine bei einem erneuten Bearbeitungsfall auf einige wenige Handgriffe reduziert, deren Durchführung keiner vorbereitenden oder kontrollierenden Messungen bedarf. Es ergeben sich äußerst kurze Umrüstzeiten zwischen aufeinanderfolgenden aktiven Arbeitsperioden, so daß Stillstandszeiten der Maschine auf ein Minimum reduziert und das Maschineninvestment damit optimal genutzt ist.

Die beiliegenden Figuren erläutern die Erfindung anhand von Ausführungsbeispielen; es stellen dar:
- Figur 1: eine Ansicht einer Werkzeugmaschine mit einer erfindungsgemäßen Aufspannung;
- Figur 2: eine Trägerplatte der Werkzeugmaschine gemäß Figur 1;
- Figur 2a: eine vergrößerte Schnittdarstellung in einem Schritt, welcher in Figur 2 senkrecht zur Längsrichtung einer T-Nut durch die Achsen von dieser T-Nut benachbarten pyradmidenförmigen Vorsprüngen gelegt ist;
- Figur 3: die Unterseite eines plattenförmigen Zwischenträgers mit rechtwinkelig gekreuzten Linienrasterfeldern;
- Figur 4: einen Längsschnitt durch eine Aufspannung einer Mehrzahl von Werkstücken auf einer Aufspannfläche;
- Figur 5: einen Anschlagkörper für eine Anordnung gemäß Figur 4;
- Figur 6: die Untersicht eines Langteils zur Gewinnung von plattenförmigen Zwischenträgern;
- Figur 7: eine Explosionsdarstellung eines Werkstücks in Verbindung mit einem zugehörigen plattenförmigen Zwischenträger;
- Figur 8: einen quaderförmigen Zwischenträger zur Befestigung eines Werkstücks auf einer Aufspannfläche und
- Figur 9: einen Träger in Form einer Auflageplatte mit Befestigungsmitteln zur Befestigung auf einem Tisch einer Werkzeugmaschine.

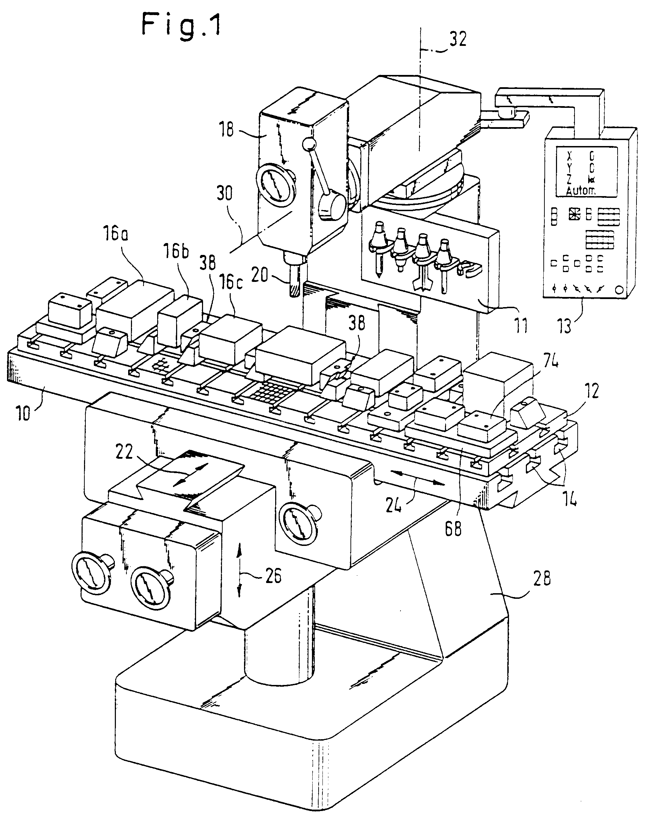

In Figur 1 erkennt man eine Werkzeugmaschine in Form einer üblichen Fräsmaschine mit einem Bearbeitungstisch 10. Auf dem Bearbeitungstisch 10 ist eine Trägerplatte 12 in herkömmlicher Weise aufgespannt durch Spannbolzen, welche die Trägerplatte 12 durchsetzen und in T-Nuten 14 durch Nutensteine (nicht dargestellt) verankert sind. Auf der Trägerplatte 12 sind eine Mehrzahl von Werkstücken 16a, 16b, 16c usw. aufgespannt, die einer Bearbeitung durch einen Fräskopf 18 mit Fräswerkzeug 20 unterworfen werden sollen. Der Bearbeitungstisch 10 ist in Pfeilrichtungen 22, 24 und 26 in drei zueinander senkrechten Koordinatenrichtungen gegenüber der Basis 28 verstellbar. Der Fräskopf 18 ist um die Achsen 30 und 32 drehbar. Allen Bewegungsmöglichkeiten sind entsprechende Feststellmittel zur Feststellung einer einmal eingestellten Verschiebungs- oder Verdrehungsposition zugeordnet.

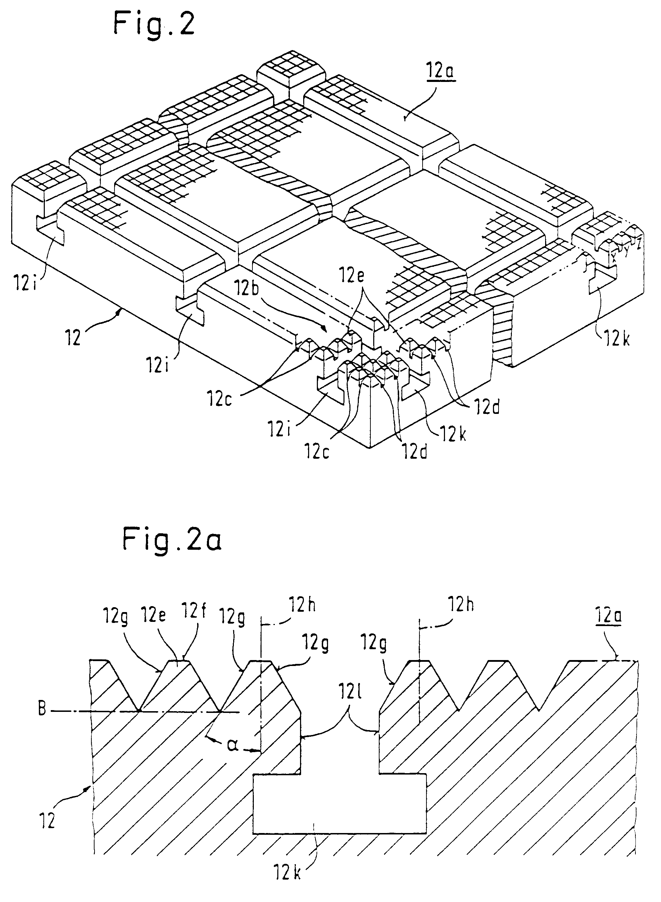

In Figur 2 ist die Trägerplatte 12 im einzelnen dargestellt, wobei die Befestigungsmittel an der Trägerplatte und an dem Bearbeitungstisch nicht dargestellt sind. Die Trägerplatte 12 weist eine Aufspannfläche 12a auf. In die Aufspannfläche 12a ist ein Kreuzrasterfeld 12b eingearbeitet. Dieses Kreuzrasterfeld ist durch eine erste Schar von Nuten 12c und eine zweite Schar von Nuten 12d gebildet. Die Nuten verlaufen alle parallel zu der Aufspannfläche 12a; die Nuten der Nutenschar 12c und die Nuten der Nutenschar 12d kreuzen sich unter rechten Winkeln, so daß zwischen jeweils zwei benachbarten Nuten der Nutenschar 12c und jeweils zwei benachbarten Nuten der Nutenschar 12d jeweils ein pyramidenstumpfförmiger Vorsprung 12e gebildet ist. Die Vorsprünge 12e weisen eine abgeplattete obere Endfläche 12f auf, wie aus Figur 2a ersichtlich. Die pyramidenstumpfförmigen Vorsprünge sind gerade, gleichseitige Pyramiden mit Seitenflächen 12g. Die Seitenflächen 12g schließen mit der Pyramidenachse 12h einen Winkel Alpha von ca. 30° bis 60°, vorzugsweise ca. 45°, ein, und zwar bei Betrachtung in der Schnittebene gemäß Figur 2a, welche durch die Achsen 12h der pyramidenförmigen Vorsprünge 12e gelegt ist. Abweichend von der Darstellung in Figur 2a könnten die Seitenflächen 12g auch gekrümmt sein, etwa zylindrisch gekrümmt oder einer Evolventenlinie folgend gekrümmt, und zwar zu den Nuten hin jeweils konvex gekrümmt. In Figur 2 erkennt man, daß unterhalb des Basisniveaus B (siehe Figur 2a) der pyramidenförmigen Vorsprünge 12e T-Nuten angeordnet sind, und zwar zwei sich senkrecht auf gleichem Niveau innerhalb der Höhenerstreckung der Platte 12 kreuzende Scharen von T-Nuten 12i und 12k. Eine der Nuten 12k ist in Figur 2a im einzelnen dargestellt, wobei kein Unterschied zur Ausbildung der T-Nuten 12i und der diesen benachbarten Vorsprüngen besteht. Die Ausgangsflächen 12l der T-Nuten gehen auf dem Basisniveau B spitzwinkelig in die Seitenflächen 12g benachbarter Vorsprünge 12e über.

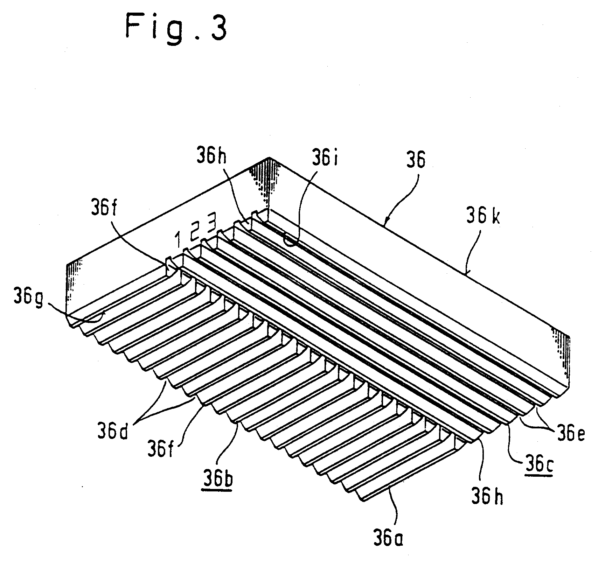

In Figur 3 ist ein Gegenstand zur Befestigung auf der Trägerfläche 12a der Trägerplatte 12 dargestellt. Diese Zwischenträgerplatte 36 besitzt eine Fußfläche 36a. In der Fußfläche 36a sind zwei Linienrasterfelder 36b und 36c eingearbeitet. Das Linienrasterfeld 36b ist durch eine Schar von Nuten 36d gebildet, das Linienrasterfeld 36c durch eine Schar von Nuten 36e. Zwischen den Nuten 36d sind Rippen 36f gebildet, deren Kopfflächen 36g abgeplattet sind und mit der Fußfläche 36a zusammenfallen. Zwischen den Nuten 36e sind Rippen 36h gebildet, deren Kopfflächen 36i ebenfalls abgeplattet sind. Die Profile der Rippen 36f und 36h entsprechen den in Figur 2a dargestellten Profilen der pyramidenförmigen Vorsprünge 12e. Die Endflächen der Rippen 36f, welche an das Linienrasterfeld 36c angrenzen, haben die gleiche Neigung gegenüber einer nicht dargestellten Hochachse wie die Seitenflächen der Pyramiden 12e in Figur 2a. Die randnahen Endflächen der Rippen 36f haben vorzugsweise ebenfalls eine entsprechende Neigung. Dies gilt auch für die randnahen Endflächen der Rippen 36h.

Beim Aufsetzen der Zwischenträgerplatte 36 auf eine Trägerplatte 12 gemäß Figur 2 greifen die Rippen 36f und die Rippen 36h jeweils in Nuten der Nutenscharen 12c und 12d des Kreuzrasterfelds 12b der Trägerplatte 12 ein. Die Befestigung der Zwischenträgerplatte 36 auf der Trägerplatte 12 kann beispielsweise durch Bolzen erfolgen, welche Bohrungen der Zwischenträgerplatte 36 durchsetzen und mit Nutsteinen innerhalb der T-Nuten 12i und 12k verschraubt sind. Alternativ ist es aber auch möglich, in den T-Nuten 12k und 12i jeweils angrenzend an die Ränder der Zwischenträgerplatte 36 Spannvorrichtungen zu verankern, welche auf die fußflächenferne Oberseite 36k der Zwischenträgerplatte 36 klemmend einwirken.

Es ist ohne weiteres erkennbar, daß die Zwischenträgerplatte 36 nach Lösung der jeweiligen Spann- oder Klemmittel feinstufig gegenüber der Trägerplatte, sowohl in Längsrichtung der Nutenschar 12c als auch in Längsrichtung der Nutenschar 12d versetzt werden können, wobei jeweils eine Anhebung der Zwischenträgerplatte 36 gegenüber der Trägerplatte 12 senkrecht zur Trägerfläche 12a bzw. der Fußfläche 36a um die Höhe eines Vorsprungs 12e bzw. die Höhe einer Rippe 36f, 36h erforderlich ist, so daß die Fußfläche 36a mit der Aufspannfläche 12a zusammenfällt oder die Fußfläche 36a über der Aufspannfläche 12a liegt.

Die einzelnen Vorsprungreihen können in Figur 2 durch eingeschlagene oder eingeprägte oder eingefräste Codes X,Y,Z bezeichnet sein. Ebenso können die einzelnen Längsnuten 36e durch Codes 1,2,3 bezeichnet sein. Entsprechendes gilt für die jeweils orthogonalen Vorsprungreihen in Figur 2 und für die orthogonalen Nuten 36d in Figur 3. Durch listenmäßiges oder computermäßiges Aufzeichnen zusammengehöriger Vorsprungreihen und Rippen läßt sich eine bestimmte Stellung der Zwischenträgerplatte 36 gegenüber der Trägerplatte 12 jederzeit reproduzieren.

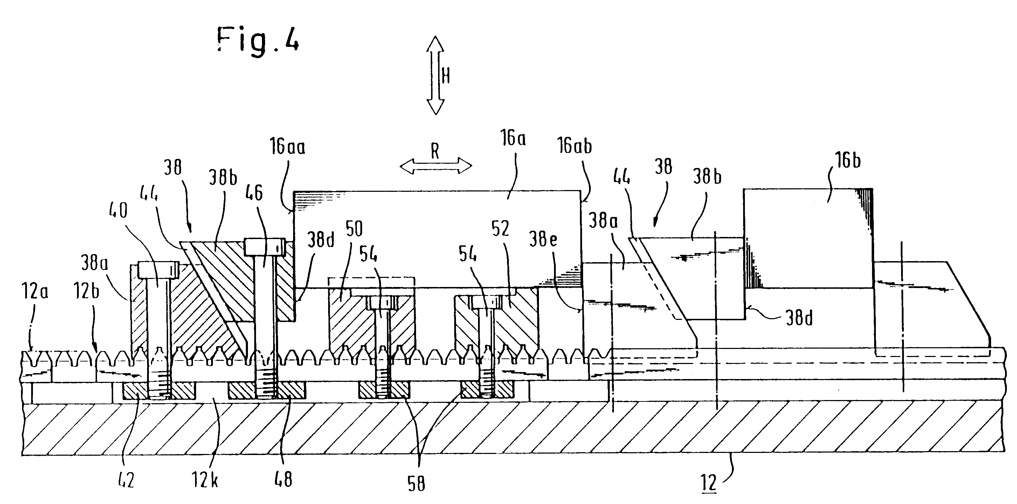

In Figur 4 erkennt man die Trägerplatte 12 wieder. Auf dieser Zwischenträgerplatte sind eine Mehrzahl von zu bearbeitenden Werkstücken 16a und 16b eingespannt. Zur Einspannung des Werkstücks 16a dienen Spannwerkzeuge 38. Jedes dieser Spannwerkzeuge 38 besteht aus einem Stützteil 38a und einem Spannteil 38b. Die Stützteile 38a weisen eine Fußfläche mit Linienrasterfeldern auf, wie in Figur 3 dargestellt, und sind durch Spannbolzen 40 in einer T-Nut 12k mittels Nutsteinen 42 verspannt. Sie sind positioniert wie vorstehend im Zusammenhang mit der Beschreibung der Figuren 2 und 3 beschrieben.

Ihre Lage kann jederzeit reproduziert werden, beispielsweise mit Hilfe der hier nicht eingezeichneten Codes X,Y,Z ...1,2,3... An den Stützteilen und den Spannteilen sind zusammenwirkende Schrägführungen 44 angebracht, welche gleichzeitig eine Führung senkrecht zur Trägerfläche 12a und eine Verschiebung in Reihenlängsrichtung R der Figur 4 bewirken. Die Spannteile 38b werden durch Spannbolzen 46 gespannt, welche die Spannteile 38b durchsetzen und mit Nutsteinen 48 in der T-Nut 12k verschraubt sind. Durch Spannen der Spannbolzen 46 kann das Werkstück 16a zwischen den ihm benachbarten Spannwerkzeugen 38 eingespannt werden. Dabei liegt das Werkstück 16a mit seiner einen Endfläche 16aa an einer Spannfläche 38d des Spannteils 38b des linken Spannwerkzeugs 38 an und mit seiner anderen Endfläche 16ab an einer Spannfläche 38e des Stützteils 38a des anderen rechtsliegenden Spannwerkzeugs 38. Die beiden Spannwerkzeuge 38 können untereinander gleich ausgebildet sein. Zwischen aufeinanderfolgenden Werkstücken 16a und 16b wird als Abstand jeweils nur die in Reihenlängsrichtung R gemessene Länge eines einzigen Spannwerkzeugs 38 benötigt. Natürlich können senkrecht zur Zeichenebene jeweils mehrere Spannwerkzeuge 38 nebeneinander angeordnet sein, welche jeweils an ein und demselben Werkstück angreifen. Man erkennt aus Figur 4, daß jedes der Spannwerkzeuge 38 zwei aufeinanderfolgenden Werkstücken 16a und 16b gemeinsam ist, wobei es an dem jeweils einen mit der Spannfläche 38e seines Stützteils 38a und an dem anderen der benachbarten Werkstücke mit der Spannfläche 38d seines Spannteils 38b angreift.

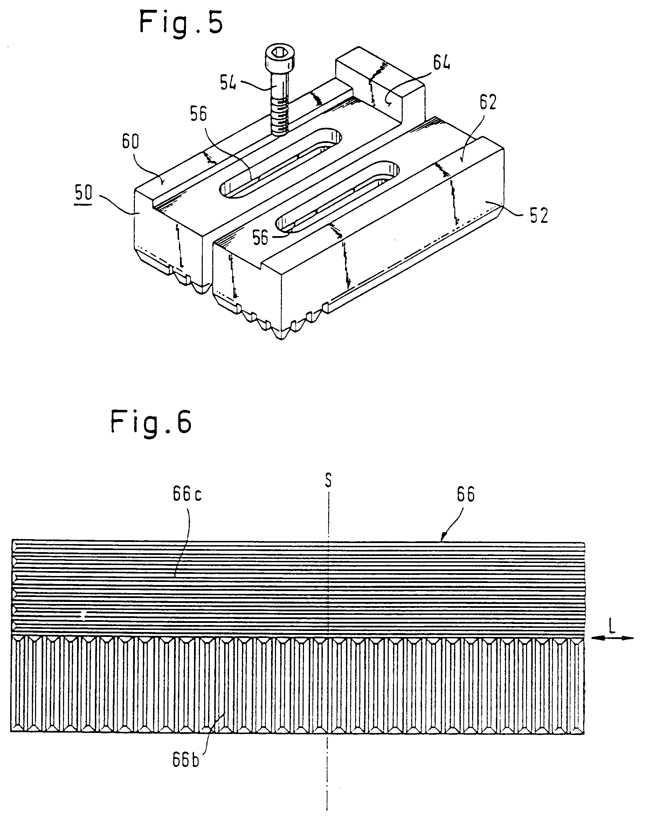

Auf diese Weise lassen sich die Werkstücke 16a, 16b usw. in dichter Anordnung, gegebenenfalls in mehreren Reihen, auf der Trägerplatte 12 verteilen und spannen, wobei eine Wiederherstellung einer einmal erfolgten Positionierung durch entsprechende Code-Zuordnung jederzeit kurzfristig möglich ist. Zur Positionierung der Werkstücke 16a und 16b senkrecht zur Zeichenebene und in Höhenrichtung H der Figur 4 können Anschlagteile 50 und 52 verwendet werden, wie sie in Figur 5 dargestelt sind, welche jeweils mit Fußflächen entsprechend der Figur 3 ausgeführt sind, wobei wiederum jede Fußfläche zwei zueinander orthogonale Linienrasterfelder aufweist. Die Befestigung der Anschlagteile 50 und 52 auf der Trägerplatte kann durch Imbusbolzen 54 erfolgen, welche gestufte Langlöcher 56 der Anschlagteile 50 und 52 durchsetzen und mit Nutsteinen 58 in einer der T-Nuten 12k und 12i verschraubt sind. An den Anschlagteilen 50 und 52 sind Höhenpositionierungsflächen 60 und 62 vorgesehen, welche die Höhenpositionierung des Werkstücks 16a in Höhenrichtung H übernehmen. Außerdem ist an mindestens einem der Anschlagteile 50, 52 eine Queranschlagfläche 64 angebracht, welche die Positionierung des Werkstücks 16a senkrecht zur Zeichenebene übernimmt.

In Figur 6 ist ein Langteil 66 dargestellt, welches auf seiner ganzen Länge entlang der Längsachse L mit zwei nebeneinanderliegenden Linienrasterfeldern 66b und 66c versehen ist. Von diesem Langteil, welches als Plattenprofil oder Leistenprofil ausgebildet sein kann, lassen sich durch Schnitte S Zwischenträgerplatten etwa gemäß Figur 3 durch Abschneiden gewinnen.

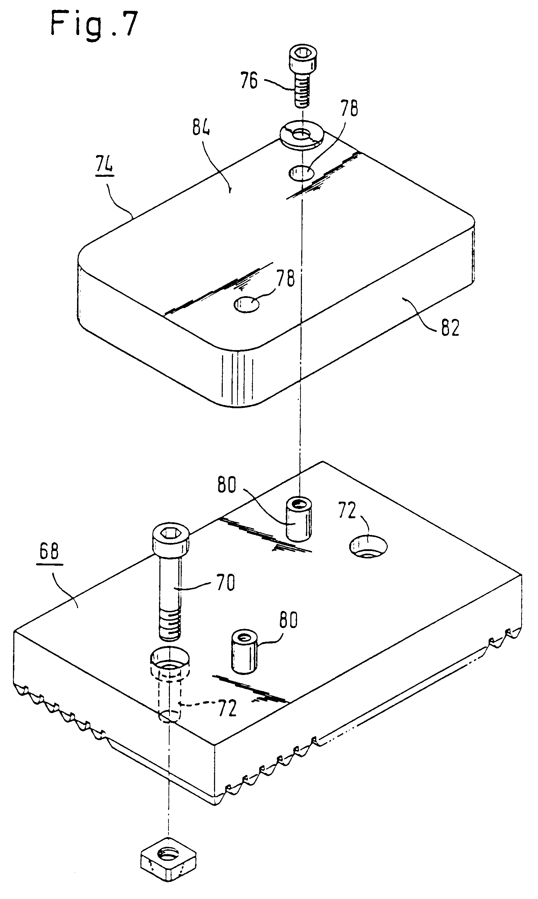

In Figur 7 ist eine Zwischenträgerplatte 68 dargestellt, die wiederum mit einer in zwei Linienrasterfelder unterteilten Fußfläche versehen ist. Die Zwischenträgerplatte 68 ist hier durch Befestigungsbolzen 70 auf einer Trägerplatte entsprechend Figur 2 befestigbar. Hierzu ist die Zwischenträgerplatte 68 von gestuften Bohrungen 72 durchsetzt. Ein Werkstück 74 wird auf der Zwischenträgerplatte 68 mittels Befestigungsbolzen 76 befestigt.

Die Befestigungsbolzen 76 durchsetzen Bohrungen 78 des Werkstücks, die in dem fertigen Werkstück vorgesehen sind. Diese Bohrungen können vorab auf einer Koordinatenbohrmaschine in das Werkstück 74 in richtiger gegenseitiger Zuordnung eingebohrt werden. Das so entstandene Bohrbild wird dann auf die Zwischenträgerplatte 68 übertragen. In der Zwischenträgerplatte 68 werden entsprechende Bohrungen zur Aufnahme von Befestigungshülsen 80 gebohrt. Nach Einsetzen der Befestigungshülsen 80 in die Zwischenträgerplatte 68 kann das Werkstück 74 mit seinen Bohrungen auf den Befestigungshülsen 80 zentriert und in diesen vermittels der Befestigungsbolzen 76 befestigt werden. Damit besteht nunmehr die Möglichkeit, etwa die Umfangskontur 82 des Werkstücks auf einer Fräsmaschine gemäß Figur 1 zu bearbeiten. Die Bearbeitung der Deckfläche 84 kann nach Lösen der Befestigungsbolzen 76 erfolgen oder vor Anbringung dieser Befestigungsbolzen.

Die Konturbearbeitung der Umfangskontur 82 kann programmgesteuert erfolgen aufgrund eines Führungsprogramms für den jeweiligen Fräskopf, welches auf die Achsen der beiden Bohrungen 78 bezogen ist. Es braucht also nur die Achsposition der Bohrungen 78 nach einmal erfolgter Aufspannung der Zwischenträgerplatte 68 und des Werkstücks 74 vermessen und in die Steuerung der Maschine eingegeben zu werden. Die Lage der Zwischenträgerplatte läßt sich durch Code-Vergleich jederzeit kurzfristig reproduzieren.

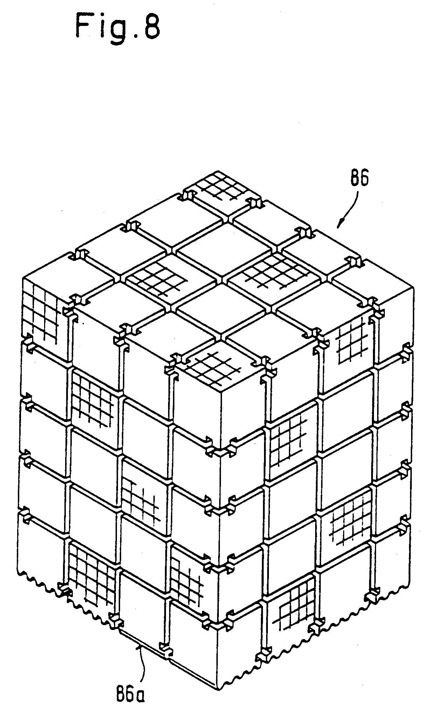

In Figur 8 ist ein Zwischenträgerblock 86 dargestellt, welcher eine Fußfläche 86a aufweist. Die Fußfläche 86a ist wieder von zwei Linienrasterfeldern gebildet, wie in Figur 3 dargestellt. Der Block ist quaderförmig oder kubisch. In den neben der Fußfläche 86a verbleibenden anderen Seitenflächen oder wenigstens in einem Teil von diesen sind T-Nuten vorgesehen, welche in die jeweiligen Seitenflächen ausmünden. Diese T-Nuten können in einer oder in der anderen oder in beiden von zwei zueinander senkrechten Richtungen verlaufen und dienen zum Anbau der jeweils zu behandelnden oder zu untersuchenden Werkstücke, wobei der Anbau durch Spannbolzen erfolgen kann, welche diese Werkstücke durchsetzen und in Nutensteine jeweils einer oder mehrerer Nuten eingeschraubt sind. Dieser Zwischenträgerblock erlaubt es, gleichzeitig mehrere Werkstücke über einer Aufspannfläche gemäß Figur 2 anzuordnen oder Werkstücke in der für die Bearbeitung jeweils günstigsten Orientierung anzubringen. Die Befestigung des Anbaublocks gemäß Figur 8 auf einer Trägerplatte gemäß Figur 2 kann mit Hilfe von zu der Fußfläche 86a senkrechten Durchgangsbohrungen durch den Block 86 erfolgen (nicht dargestellt), kann aber auch mittels Spannbolzen erfolgen, welche sich über die Fußfläche 86a und die Aufspannfläche 12a der Figur 2 hinweg zwischen einander benachbarten T-Nuten der Trägerplatte 12 und des Zwischenträgerblocks 86 erfolgen. In diesem Fall wird man die T-Nuten der Trägerplatte 12 und/oder des Zwischenträgerblocks 86 so ausbilden, daß sie für den Zugang eines Spannwerkzeugs zu jeweils einem Nutenstein ausreichend Platz bieten. Beispielsweise könnte man daran denken, die Nutensteine in diesem Fall als Rundteile auszubilden und in ihrer Umfangsfläche in kleinem Winkelabstand Radialbohrungen vorzusehen, in welche ein Spanndorn sukzessive eingesteckt werden kann, der jeweils zur Drehung des Nutensteins um einen dem Winkelabstand entsprechenden Spannwinkel dient.

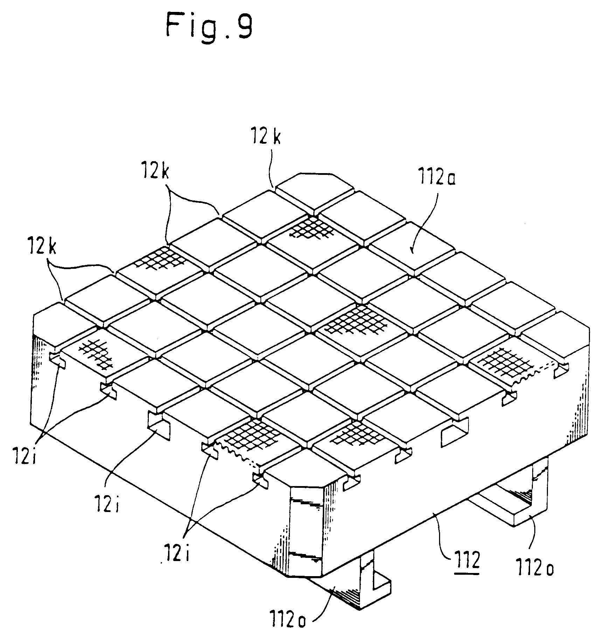

In Figur 9 ist eine gegenüber der Trägerplatte 12 abgewandelte Ausführungsform einer Trägerplatte 112 dargestellt, welche sowohl zur Aufnahme eines Zwischenträgerblocks gemäß Figur 8 als auch zur Aufnahme von den in den Figuren 3 bis 7 beschriebenen Spannelementen bzw. Vorrichtungen geeignet ist und eine Aufspannfläche 112a entsprechend der Aufspannfläche 12a gemäß Figur 2 aufweist. Die Trägerplatte 112 unterscheidet sich von derjenigen gemäß Figur 2 dadurch, daß die Unterseite den Positionierungs- und Führungssystemen des jeweiligen Maschinenherstellers angepaßt ist, beispielsweise durch die L-förmigen Füße 112o.

In Figur 1 ist noch ein Werkzeugmagazin 11 angedeutet, aus dem die Werkzeuge durch den Fräskopf 18 automatisch entnommen werden können. Ferner ist mit 13 eine Steuerung angedeutet, von welcher aus sowohl die Schlittenbewegungen als auch die Werkzeugaustauschvorgänge gesteuert werden können.

Die erfindungsgemäße Anordnung gestattet eine hochpräzise und reproduzierbare Positionierung der jeweils zu bearbeitenden Gegenstände. Höchste Präzision wird dann erreicht, wenn die Trägerplatte 12 starrer Bestandteil des Schlittens 10 ist, weil dann bei der Positionierung beispielsweise eines Spannwerkzeugs 38 nur eine einzige und überdies hochpräzise Toleranzstelle in Eingriff ist.

Die Spannwerkzeuge 38 gemäß Figur 4 können beispielsweise auch dann zum Einsatz kommen, wenn es gilt, ein langes Werkstück an in seiner Längsrichtung beabstandeten Stellen vibrationsfest einzuspannen.

Die Trägerplatte und die Fußplatten der Gegenstände können aus herkömmlichem Werkzeugstahl hergestellt sein. Die Gegenstände können darüber hinaus auch aus Leichtmetall oder Kunststoff hergestellt werden, je nach den gegebenen Festigkeitsanforderungen. Dabei ist auch daran gedacht, Gegenstände, etwa die Spannwerkzeuge 38 der Figur 4, aus leicht bearbeitbarem Werkstoff relativ billig herzustellen und im Anwenderbetrieb je nach Anwendungsfall zu bearbeiten.

Es sei nochmal darauf hingewiesen, daß die Trägerplatte Teil der jeweiligen Behandlungs- oder Meßeinrichtung sein oder auf dieser bleibend montiert sein kann, so daß ihre Position nur einmal vermessen und in die Steuerung eingegeben zu werden braucht.

Zurückkommend auf den Zwischenträger gemäß Figur 8 sei noch erwähnt, daß mindestens ein Teil der Seitenflächen des dort dargestellten Würfels als Kreuzrasterfelder entsprechend der Darstellung in Figuren 2 und 2a ausgeführt sein können, beispielsweise sämtliche vertikalen Seitenflächen, aber auch die obere Endfläche. In diesem Falle ist es möglich, an den so ausgebildeten Seitenflächen jeweils einen Gegenstand mit einer Flußfläche entsprechend Figur 3 in beliebig reproduzierbaren Postionen anzubringen.

## Patentansprüche

1. Bearbeitungs- oder Untersuchungsvorrichtung, insbesondere Werkzeugmaschine, mit einem Aufspanntisch (10,12) für aufzuspannende Gegenstände (36), wobei der Aufspanntisch (10,12) eine Aufspannfläche (12a) und ein Feld von an diese Aufspannfläche angrenzenden Spannmitteln, wie T-Nuten (12i,12k), zum Aufspannen der Gegenstände (36) aufweist,
gekennzeichnet durch die Kombination folgender Merkmale:
a) die Aufspannfläche (12a) ist im wesentlichen auf ihrem gesamten Flächenbereich mit einem Kreuzrasterfeld (12b) von pyramidenförmigen Vorsprüngen (12e) versehen, welches durch zwei sich unter einem Winkel von 90° kreuzenden Scharen von jeweils zueinander parallelen Nuten (12c,12d) gebildet ist, so daß durch jeweils zwei sich kreuzende Paare von benachbarten Nuten (12c,12d) jeweils ein pyramidenförmiger Vorsprung (12e) begrenzt ist;
b) die pyramidenförmigen Vorsprünge (12e) sind parallel zur Aufspannfläche (12a) mit solchen Abflachungen versehen (bei 12), daß wahlweise auf die Aufspannfläche (12a) Gegenstände mit einem dem Kreuzrasterfeld (12b) angepaßten Linienrasterfeld (36b,36c) an der jeweiligen Fußfläche und Gegenstände mit planer Fußfläche aufspannbar sind;
c) als Spannmittel verwendbare T-Nuten (12i,12k) eines Felds von in die Aufspannfläche ausmündenden T-Nuten (12i,12k) verlaufen parallel zu mindestens einer der sich kreuzenden Scharen von pyramidenbildenden Nuten (12c,12d) des Kreuzrasterfelds (12b);
d) benachbarte, zueinander parallele T-Nuten (12i,12k) haben voneinander einen Abstand - jeweils von Querschnittsmitte zur Querschnittsmitte der T-Nuten (12i,12k) gemessen -, der einem ganzzahligen Vielfachen der Teilung der Vorsprünge (12e) entspricht,
und der Querschnitt einer T-Nut (12k) ist symmetrisch zwischen den Querschnitten zweier beidseitig unmittelbar neben dieser T-Nut (12k) liegender pyramidenförmiger Vorsprünge (12e) angeordnet.

2. Vorrichtung nach Anspruch 1,
dadurch gekennzeichnet,
daß als zusätzliche Spannmittel elektromagnetische oder permanentmagnetische Spannmittel vorgesehen sind.

3. Vorrichtung nach Anspruch 1 oder 2,
dadurch gekennzeichnet,
daß die Querschnitte der pyramidenförmigen Vorsprünge (12e) und ggf. der Rippen (36f,36h) des Linienrasterfelds (36b,36c) durch konvex gekrümmte Flanken begrenzt sind.

4. Vorrichtung nach einem der Ansprüche 1 - 3,
dadurch gekennzeichnet,
daß die Teilung der pyramidenförmigen Vorsprünge (12e) und ggf. der Rippen (36f,36h) des Linienrasterfelds (36b,36c), d.h. der jeweilige Abstand von Querschnittsmitte (12h) zu Querschnittsmitte (12h), ca. 1 bis ca. 8 mm, vorzugsweise ca. 3 bis ca. 6 mm, beträgt.

5. Vorrichtung nach einem der Ansprüche 1 - 4,
dadurch gekennzeichnet,
daß das Feld von T-Nuten (12i, 12k) sich kreuzende T-Nuten (12i,12k) umfaßt.

6. Vorrichtung nach einem der Ansprüche 1 - 5,
dadurch gekennzeichnet,
daß die Ausgangsbegrenzungsflächen (12l) einer T-Nut (12k), im Querschnitt durch die T-Nut (12k) betrachtet, stufenlos an die Flanken (12g) benachbarter Vorsprünge (12k) im Basisbereich (B) dieser Vorsprünge anschließen.

7. Vorrichtung nach einem der Ansprüche 1 - 6,
dadurch gekennzeichnet,
daß die aufzuspannenden Gegenstände Spannbolzendurchgänge (56) im wesentlichen senkrecht zu der jeweiligen Fußfläche aufweisen.

8. Vorrichtung nach einem der Ansprüche 1 - 7,
dadurch gekennzeichnet,
daß die aufzuspannenden Gegenstände (86) mindestens eine T-Nut angrenzend an der jeweiligen Fußfläche aufweisen.

9. Vorrichtung nach einem der Ansprüche 2 - 8,
dadurch gekennzeichnet,
daß in der Aufspannfläche zumindest im Bereich des Kreuzrasterfeldes Elektromagnete oder Permanentmagnete angeordnet sind und daß der jeweilige Gegenstand wenigstens z. T. aus magnetischem Werkstoff besteht.

10. Vorrichtung nach einem der Ansprüche 1 - 9,
dadurch gekennzeichnet,
daß die Aufspannfläche (12a) an einem auf dem Aufspanntisch (10,12) befestigten Zwischenträger (12,86) ausgebildet ist.

11. Vorrichtung nach Anspruch 10,
dadurch gekennzeichnet,
daß der Zwischenträger (12) von einer Auflageplatte (12) eines Grundtisches (10) gebildet ist, wobei die Größe der Auflageplatte (12) vorzugsweise wenigstens annähernd der Größe des Grundtisches (10) entspricht.

12. Vorrichtung nach Anspruch 10,
dadurch gekennzeichnet,
daß der Zwischenträger (86) von einem Quader (86), insbesondere einem Würfel, gebildet ist, wobei mindestens ein Teil der Seitenflächen dieses Quaders bzw. Würfels als Aufspannflächen ausgebildet sind.

13. Vorrichtung nach Anspruch 12,
dadurch gekennzeichnet,
daß wenigstens eine der Seitenflächen des Quaders bzw. Würfels mit einem bzw. zwei Linienrasterfeldern ausgeführt ist.

14. Vorrichtung nach Anspruch 12 oder 13,
dadurch gekennzeichnet,
daß von den als Aufspannflächen dienenden Seitenflächen des Quaders bzw. Würfels mindestens ein Teil als Kreuzrasterfeld ausgebildet ist.

15. Vorrichtung nach einem der Ansprüche 10 - 14,
dadurch gekennzeichnet,
daß der Zwischenträger (12,112i,86) durch formschlüssige, ggf. im Raster angeordnete Eingriffselemente (14;112o) des Aufspanntisches (10) und des Zwischenträgers (12,86, 112) auf dem Aufspanntisch (10) in mindestens einer Position positionierbar ist, vorzugsweise reproduzierbar.

16. Vorrichtung nach einem der Ansprüche 10 - 15,
dadurch gekennzeichnet,
daß der Zwischenträger (12) als eine Beschickungsplatte ausgebildet ist.

17. Vorrichtung nach einem der Ansprüche 1 - 16,
dadurch gekennzeichnet,
daß der Gegenstand von einem Anschlagkörper (50,52) und/oder einem Zwischenträger (86) und/oder einem Stützteil (38a) eines Aufspannwerkzeugs (38) für einen auf der Aufspannfläche (12a) anzubringenden Behandlungs- oder Untersuchungsgegenstand (16a) gebildet ist.

18. Vorrichtung nach einem der Ansprüche 1 - 17,
dadurch gekennzeichnet,
daß das Linienrasterfeld (36b,36c) zwei Linien-Teilrasterfelder (36b,36c) aufweist, deren jedes von einer Schar zueinander paralleler Nuten (36d,36e) gebildet ist, welche zwischen sich jeweils eine Rippe (36f,36h) bilden, wobei die Nuten (36d,36e) rechtwinkelig zueinander verlaufen.

19. Vorrichtung nach Anspruch 18,
dadurch gekennzeichnet,
daß der Gegenstand (36;52;68) plattenförmig oder leistenförmig ausgebildet ist.

20. Vorrichtung nach Anspruch 19,
dadurch gekennzeichnet,
daß der platten- oder leistenförmige Gegenstand (36) von einem Abschnitt eines Langteils (66) gebildet ist, wobei mindestens eine Seitenfläche dieses Langteils (66) zwei in Längsrichtung des Langteils verlaufende und in Querrichtung des Langteils gegeneinander abgegrenzte Linienrasterfelder (66b,66c) aufweist, von denen jeweils eines (66c) durch in Längsrichtung des Langteils (66) verlaufende Nuten und das andere (66b) durch in Querrichtung zum Langteil verlaufende Nuten gebildet ist.

21. Vorrichtung nach einem der Ansprüche 19 und 20, mit einer Vorratshaltung für plattenförmige oder leistenförmige Gegenstände (36) oder Teile davon,
dadurch gekennzeichnet,
daß die Vorratshaltung mindestens ein Langteil (66) umfaßt, von dem je nach Bedarf ein plattenförmiger oder leistenförmiger Gegenstand (36) oder ein Teil davon mit gewünschter Abmessung abtrennbar ist.

22. Vorrichtung nach Anspruch 21,
dadurch gekennzeichnet,
daß mindestens eine Seitenfläche des Langteils (66) zwei in Längsrichtung des Langteils nebeneinander verlaufende Linienrasterfelder (66b,66c) aufweist, deren eines (66c) durch in Längsrichtung (L) des Langteils (66) verlaufende Nuten und deren anderes (66b) durch quer zur Längsrichtung (L) des Langteils verlaufende Nuten gebildet ist.

23. Vorrichtung nach einem der Ansprüche 1 - 22,
gekennzeichnet durch eine Mehrzahl von in Reihe auf dem Kreuzrasterfeld der Aufspannfläche angeordneten Aufspannwerkzeugen (38), deren jedes ein Stützteil (38a) mit an der Fußfläche angebrachtem Linienrasterfeld zur Fixierung auf der Aufspannfläche (12a) aufweist, wobei an den Stützteilen (38a) mindestens einer Teilgruppe der Mehrzahl durch eine Schrägführung (44) jeweils ein Spannteil (38b) gleichzeitig senkrecht zur Aufspannfläche (12a) und in Reihenlängsrichtung (R) geführt ist.

24. Vorrichtung nach Anspruch 23,
dadurch gekennzeichnet,
daß aufeinanderfolgende Behandlungs- oder Untersuchungsgegenstände (16a,16b) in Reihenlängsrichtung (R) nur um die Länge eines Aufspannwerkzeugs (38) beabstandet sind derart, daß in Reihenlängsrichtung aufeinanderfolgende Behandlungs- oder Untersuchungsgegenstände zwischen eine Spannfläche (38e) des Stützteils (38a) eines einendig (16ab) zugehörigen Aufspannwerkzeugs (38) und eine Spannfläche (38d) des Spannteils (38b) eines anderendig (16aa) zugehörigen Aufspannwerkzeugs (38) eingespannt sind.

25. Vorrichtung nach Anspruch 23 oder 24,
dadurch gekennzeichnet,
daß die Spannteile (38b) der Aufspannwerkzeuge (38) durch Spannbolzen (46) gegen die Aufspannfläche (12a) annäherbar sind.

## Claims

1. Processing or examination device, preferably a machine tool, with a clamping table (10, 12) for objects (36) to be clamped, wherein the clamping table (10, 12) comprises a clamping surface (12a) and an area of clamping means, such as T-slots (12i, 12k), which adjoin this clamping surface, for clamping the objects (36),
characterised by the combination of the following features:
a) the clamping surface (12a) is provided essentially over its entire surface region with a cross raster area (12b) of pyramidal projections (12e) which is formed by two groups, which intersect at an angle of 90°, of slots (12c, 12d) which are each parallel to one another, so that a pyramidal projection (12e) is defined by each two intersecting pairs of adjacent slots (12c, 12d);
b) the pyramidal projections (12e) are provided parallel to the clamping surface (12a) with flattened portions (at 12) such that either objects with a line raster area (36b, 36c) adapted to the cross raster area (12b) at the respective base surface or objects with a planar base surface can be clamped to the clamping surface (12a);
c) T-slots (12i, 12k), which can be used as clamping means, of an area of T-slots (12i, 12k) which lead into the clamping surface extend parallel to at least one of the intersecting groups of pyramid-forming slots (12c, 12d) of the cross raster area (12b);
d) adjacent, parallel T-slots (12i, 12k) are disposed at a distance from one another - in each case measured from cross-sectional centre to cross-sectional centre of the T-slots (12i, 12k) - which corresponds to an integral multiple of the pitch of the projections (12e), and the cross section of a T-slot (12k) is disposed symmetrically between the cross sections of too pyramidal projections (12e) lying directly next to this T-slot (12k) on both sides.

2. Device according to claim 1, characterised in that electromagnetic or permanent-magnetic clamping means are provided as additional clamping means.

3. Device according to claim 1 or 2, characterised in that the cross sections of the pyramidal projections (12e) and, if applicable, of the ribs (36f, 36h) of the line raster area (36b, 36c) are defined by flanks which are curved in a convex manner.

4. Device according to one of claims 1 to 3, characterised in that the pitch of the pyramidal projections (12e) and, if applicable, of the ribs (36f, 36h) of the line raster area (36b, 36c), i.e. the respective distance from cross-sectional centre (12h) to cross-sectional centre (12h), is approximately 1 to approximately 8 mm, preferably approximately 3 to approximately 6 mm.

5. Device according to one of claims 1 - 4, characterised in that the area of T-slots (12i, 12k) comprises intersecting T-slots (12i, 12k).

6. Device according to one of claims 1 - 5, characterised in that the initial boundary surfaces (12l) of a T-slot (12k), viewed in cross section through the T-slot (12k), steplessly adjoin the flanks (12g) of adjacent projections (12k) in the base region (B) of these projections.

7. Device according to one of claims 1 - 6, characterised in that the objects which are to be clamped comprise clamping bolt passages (56) essentially perpendicularly to the respective base surface.

8. Device according to one of claims 1 - 7, characterised in that the objects (86) which are to be clamped comprise at least one T-slot adjacent to the respective base surface.

9. Device according to one of claims 2 - 8, characterised in that electromagnets or permanent magnets are disposed in the clamping surface, at least in the region of the cross raster area, and that the respective object consists at least in part of a magnetic material.

10. Device according to one of claims 1 - 9, characterised in that the clamping surface (12a) is formed on an intermediate carrier (12, 86) secured to the clamping table (10, 12).

11. Device according to claim 10, characterised in that the intermediate carrier (12) is formed by a bearing plate (12) of a base table (10), the size of the bearing plate (12) preferably corresponding at least approximately to the size of the base table (10).

12. Device according to claim 10, characterised in that the intermediate carrier (86) is formed by a cuboid (86), in particular a cube, at least some of the side faces of this cuboid or cube being formed as clamping faces.

13. Device according to claim 12, characterised in that at least one of the side faces of the cuboid or cube is made with one or two line raster areas.

14. Device according to claim 12 or 13, characterised in that at least some of the side faces of the cuboid or cube which serve as clamping faces are formed as a cross raster area.

15. Device according to one of claims 10 - 14, characterised in that the intermediate carrier (12, 112i, 86) can be positioned on the clamping table (10) in at least one position, preferably in a reproducible manner, by means of positive engagement elements (14, 112o), which may be disposed in the raster, of the clamping table (10) and of the intermediate carrier (12, 86, 112).

16. Device according to one of claims 10 - 15, characterised in that the intermediate carrier (12) is formed as a feed plate.

17. Device according to one of claims 1 - 16, characterised in that the object is formed by a stop member (50, 52) and/or an intermediate carrier (86) and/or a support part (38a) of a clamping tool (38) for an object (16a) undergoing treatment or examination which is to be mounted on the clamping surface (12a).

18. Device according to one of claims 1 - 17, characterised in that the line raster area (36b, 36c) comprises two partial line raster areas (36b, 36c), each of which is formed by a group of parallel slots (36d, 36e) which in each case form a rib (36f, 36h) between them, the slots (36d, 36e) extending at a right angle to one another.

19. Device according to claim 18, characterised in that the object (36; 52; 68) is plate-shaped or strip-shaped.

20. Device according to claim 19, characterised in that the plate- or strip-shaped object (36) is formed by a section of an elongate part (66), at least one side face of this elongate part (66) comprising two line raster areas (66b, 66c) which extend in the longitudinal direction of the elongate part, are demarcated from one another in the transverse direction of the elongate part and one (66c) of which is formed by slots extending in the longitudinal direction of the elongate part (66) and the other (66b) of which is formed by slots extending in the transverse direction to the elongate part.

21. Device according to one of claims 19 and 20, with a reserve for plate-shaped or strip-shaped objects (36) or parts thereof, characterised in that the reserve comprises at least one elongate part (66), from which a plate-shaped or strip-shaped object (36) or a part thereof with the desired dimensions can be separated as required.

22. Device according to claim 21, characterised in that at least one side face of the elongate part (66) comprises two line raster areas (66b, 66c) which extend side by side in the longitudinal direction of the elongate part, one (66c) of which is formed by slots extending in the longitudinal direction (L) of the elongate part (66) and the other (66b) of which is formed by slots extending transversely to the longitudinal direction (L) of the elongate part.

23. Device according to one of claims 1 - 22, characterised by a plurality of clamping tools (38) which are disposed in a row on the cross raster area of the clamping surface and each of which comprises a support part (38a) with a line raster area located at the base surface for fixing to the clamping surface (12a), wherein a clamping part (38b) is simultaneously guided perpendicularly to the clamping surface (12a) and in the longitudinal direction (R) of the row by means of an inclined guide (44) at the support parts (38a) of at least one subgroup of the plurality.

24. Device according to claim 23, characterised in that successive objects (16a, 16b) undergoing treatment or examination are spaced apart in the longitudinal direction (R) of the row only by the length of one clamping tool (38) such that objects undergoing treatment or examination which follow one another in the longitudinal direction of the row are gripped between a clamping face (38e) of the support part (38a) of a clamping tool (38) which is associated with one end (16ab) and a clamping face (38d) of the clamping part (38b) of a clamping tool (38) which is associated with the other end (16aa).

25. Device according to claim 23 or 24, characterised in that the clamping parts (38b) of the clamping tools (38) can be brought close to the clamping surface (12a) by clamping bolts (46).

## Revendications

1. Dispositif d'usinage ou de contrôle, notamment machine-outil, comportant une table de serrage (10, 12) pour des objets (36) à serrer, la table de serrage (10, 12) présentant une surface de serrage (12a) et un champ de moyens de serrage adjacents à cette surface de serrage, tels que des rainures en T (12i, 12k), pour le serrage des objets (36),
caractérisé par la combinaison des caractéristiques suivantes :
a) la surface de serrage (12a) est pourvue sensiblement sur toute sa zone de surface d'un champ à trame croisée (12b) de saillies (12e) de forme pyramidale, qui est formé par deux ensembles se croisant sous un angle de 90°, de rainures (12c, 12d) parallèles entre elles, de sorte que par deux paires se croisant de rainures (12c, 12d) voisines, est délimitée chaque fois une saillie (12e) de forme pyramidale ;
b) les saillies (12e) de forme pyramidale sont pourvues (en 12), parallèlement à la surface de serrage (12a), de parties aplaties de sorte qu'il est possible de serrer au choix, sur la surface de serrage (12a), des objets avec un champ à trame de lignes (36b, 36c) adapté au champ à trame croisée (12b), sur la surface de pied respective et aussi des objets à surface de pied plane ;
c) des rainures en T (12i, 12k) utilisables comme moyens de serrage, d'un champ de rainures en T (12i, 12k) débouchant dans la surface de serrage, s'étendent parallèlement à au moins l'un des ensembles se croisant de rainures (12c, 12d) de forme pyramidale du champ à trame croisée (12b) ;
d) des rainures en T (12i, 12k) voisines, parallèles entre elles, ont un écartement - mesuré chaque fois du milieu de la section transversale au milieu de la section transversale des rainures en T (12i, 12k) - qui correspond à un multiple entier de la division des saillies (12e), et la section transversale d'une rainure en T (12k) est disposée symétriquement entre les sections transversales de deux saillies (12e) de forme pyramidale, se trouvant des deux côtés directement adjacents à cette rainure en T (12k).

2. Dispositif selon la revendication 1,
caractérisé
en ce que comme moyens de serrage supplémentaires sont prévus des moyens de serrage électromagnétiques ou magnétiques permanents.

3. Dispositif selon la revendication 1 ou 2,
caractérisé
en ce que les sections transversales des saillies (12e) de forme pyramidale, et éventuellement des nervures (36f, 36h) du champ à trame de lignes (36b, 36c), sont limitées par des flancs convexes.

4. Dispositif selon l'une des revendications 1 à 3,
caractérisé
en ce que la division des saillies (12e) de forme pyramidale, et éventuellement des nervures (36f, 36h) du champ à trame de lignes (36b, 36c), c'est-à-dire la distance respective de milieu de section transversale (12h) à milieu de section transversale (12h), est égale de 1 mm environ à 8 mm environ, de préférence de 3 mm environ à 6 mm environ.

5. Dispositif selon l'une des revendications 1 à 4,
caractérisé
en ce que le champ de rainures en T (12i, 12k) comprend des rainures en T (12i, 12k) se croisant.

6. Dispositif selon l'une des revendications 1 à 5,
caractérisé
en ce que les surfaces de limitation de sortie (12l) d'une rainure en T (12k), considérées dans la section transversale de la rainure en T (12k), se raccordent sans gradin aux flancs (12g) de saillies (12k) voisines dans la zone de base (B) de ces saillies.

7. Dispositif selon l'une des revendications 1 à 6,
caractérisé
en ce que les objets à serrer présentent des passages pour boulons de serrage (56) sensiblement perpendiculaires à la surface de pied respective.

8. Dispositif selon l'une des revendications 1 à 7,
caractérisé
en ce que les objets (86) à serrer présentent au moins une rainure en T adjacente à la surface de pied respective.

9. Dispositif selon l'une des revendications 2 à 8,
caractérisé
en ce que dans la surface de serrage, au moins dans la zone du champ à trame croisée, sont placés des électro-aimants ou des aimants permanents, et en ce que l'objet respectif est constitué au moins en partie d'un matériau magnétique.

10. Dispositif selon l'une des revendications 1 à 9,
caractérisé
en ce que la surface de serrage (12a) est formée sur un support intermédiaire (12, 86), fixé sur la table de serrage (10, 12).

11. Dispositif selon la revendication 10,
caractérisé
en ce que le support intermédiaire (12) est formé par une plaque de support (12) d'une table de base (10), la grandeur de la plaque de support (12) correspondant de préférence au moins approximativement à la grandeur de la table de base (10).

12. Dispositif selon la revendication 10,
caractérisé
en ce que le support intermédiaire (86) est formé par un parallélépipède (86), en particulier un cube, une partie au moins des surfaces latérales de ce parallélépipède ou cube étant conformée en surfaces de serrage.

13. Dispositif selon la revendication 12,
caractérisé
en ce que l'une au moins des surfaces latérales du parallélépipède ou cube est réalisée avec un ou deux champs à trame de lignes.

14. Dispositif selon la revendication 12 ou 13,
caractérisé
en ce qu'au moins une partie des surfaces latérales du parallélépipède ou cube, servant de surfaces de serrage, est réalisée en tant que champ à trame croisée.

15. Dispositif selon l'une des revendications 10 à 14,
caractérisé
en ce que le support intermédiaire (12, 112i, 86) est positionnable sur la table de serrage (10) dans au moins une position, de préférence reproductible, par des éléments d'emboîtement (14 ; 112o), à assembler par concordance de forme, disposés en trame, de la table de serrage (10) et du support intermédiaire (12, 86, 112).

16. Dispositif selon l'une des revendications 10 à 15,
caractérisé
en ce que le support intermédiaire (12) est conformé en plaque de chargement.

17. Dispositif selon l'une des revendications 1 à 16,
caractérisé
en ce que l'objet est formé par un corps de butée (50, 52) et/ou un support intermédiaire (86) et/ou un élément d'appui (38a) d'un outil de serrage (38) pour un objet de traitement ou de contrôle (16a), à appliquer sur la surface de serrage (12a).

18. Dispositif selon l'une des revendications 1 à 17,
caractérisé
en ce que le champ à trame de lignes (36b, 36c) comporte deux champs à trame partielle de lignes (36b, 36c), dont chacun est formé par un ensemble de rainures (36d, 36e) parallèles entre elles, qui forment entre elles une nervure (36f, 36h), les rainures (36d, 36e) s'étendant à angle droit les unes par rapport aux autres.

19. Dispositif selon la revendication 18,
caractérisé
en ce que l'objet (36 ; 52 ; 68) est en forme de plaque ou en forme de baguette.

20. Dispositif selon la revendication 19,
caractérisé
en ce que l'objet (36) en forme de plaque ou de baguette est formé par une portion d'un élément allongé (66), une surface latérale au moins de cet élément allongé (66) présentant deux champs à trame de lignes (66b, 66c) s'étendant dans la direction longitudinale de l'élément allongé et délimités l'un par rapport à l'autre dans la direction transversale de l'élément allongé, dont un (66c) est formé par des rainures s'étendant dans la direction longitudinale de l'élément allongé (66) et l'autre (66b), par des rainures s'étendant dans la direction transversale à l'élément allongé.

21. Dispositif selon l'une des revendications 19 ou 20, avec une réserve d'objets (36) en forme de plaques ou en forme de baguettes ou de parties de celles-ci,
caractérisé
en ce que la réserve comprend au moins un élément allongé (66), dont au besoin peut être séparé un objet (36) en forme de plaque ou en forme de baguette ou une partie de celle-ci, avec la dimension voulue.

22. Dispositif selon la revendication 21,
caractérisé
en ce qu'au moins une surface latérale de l'élément allongé (66) présente deux champs à trame de lignes (66b, 66c) s'étendant côte à côte dans la direction longitudinale de l'élément allongé, dont un (66c) est formé par des rainures s'étendant dans la direction longitudinale (L) de l'élément allongé (66) et dont l'autre (66b) est formé par des rainures s'étendant transversalement à la direction longitudinale (L) de l'élément allongé.

23. Dispositif selon l'une des revendications 1 à 22,
caractérisé
par une pluralité d'outils de serrage (38) placés en ligne sur le champ à trame croisée de la surface de serrage, dont chacun comporte un élément d'appui (38a) avec champ à trame de lignes placé sur la surface de pied, en vue de la fixation sur la surface de serrage (12a), un élément de serrage (38b) étant guidé chaque fois, par un guidage oblique (44), de façon simultanée, perpendiculairement à la surface de serrage (12a) et dans la direction longitudinale des rangées (R), sur les éléments d'appui (38a) d'au moins un groupe partiel de la pluralité.

24. Dispositif selon la revendication 23,
caractérisé
en ce que des objets de traitement ou de contrôle (16a, 16b) successifs dans la direction longitudinale des rangées (R) ne sont espacés que de la longueur d'un outil de serrage (38), de manière que des objets de traitement ou de contrôle, se succédant dans la direction longitudinale des rangées, soient serrés entre une surface de serrage (38e) de l'élément d'appui (38a) d'un outil de serrage (38) correspondant à une extrémité (16ab) et une surface de serrage (38d) de l'élément de serrage (38b) d'un outil de serrage (38) correspondant à l'autre extrémité (16aa).

25. Dispositif selon la revendication 23 ou 24,
caractérisé
en ce que les éléments de serrage (38b) des outils de serrage (38) peuvent être approchés par des boulons de serrage (46) contre la surface de serrage (12a).
